# EUROPÄISCHE PATENTSCHRIFT

(11) **EP 0 961 930 B1**
(45) Veröffentlichungstag und Bekanntmachung des Hinweises auf die Patenterteilung: **04.08.2004**
(21) Anmeldenummer: 97952037.6
(22) Anmeldetag: 04.12.1997
(51) Int. Cl.: G01N 21/88

(54) **LICHTABTASTVORRICHTUNG**
LIGHT-SCANNING DEVICE
DISPOSITIF DE BALAYAGE LUMINEUX

(30) Priorität: 24.02.1997 DE 19707225
(43) Veröffentlichungstag der Anmeldung: 08.12.1999
(73) Patentinhaber: BODENSEEWERK PERKIN-ELMER GMBH, D-88662 Überlingen (DE)
(72) Erfinder: WULF, Jürgen, D-88662 Überlingen (DE)
(74) Vertreter: Grünecker, Kinkeldey, Stockmair & Schwanhäusser Anwaltssozietät
(86) Internationale Anmeldenummer: PCT/EP1997/006792
(87) Internationale Veröffentlichungsnummer: WO 1998/038497

(56) Entgegenhaltungen:
- US-A- 4 806 004
- US-A- 5 150 249
- US-A- 5 185 771
- US-A- 5 448 399
- US-A- 5 554 318

## Beschreibung

Die vorliegende Erfindung betrifft eine Lichtabtastvorrichtung zur Anregung und Detektion von Sekundärlicht, insbesondere von Fluoreszenzlicht, an einer Probe mit einer Lichtemissionsvorrichtung zur Aussendung von Anregungslicht mit einer für eine Sekundärlichtanregung auf oder in der Probe geeigneten Wellenlänge, einer Abtasteinheit zur Abtastung wenigstens einer Teilfläche der Probe mit dem Anregungslicht, und einer Nachweiseinheit für das bei Anregung der Probe emittierte Sekundärlicht mit einer Erfassungsoptik und mit einer Detektorvorrichtung.

Lichtabtastvorrichtungen der zuvor genannten Art werden beispielsweise zur ortsaufgelösten Fluoreszenzuntersuchung einer Probe verwendet. Dabei wird mittels der Lichtemissionsvorrichtung, bei der es sich zumeist um einen Laser handelt, das Abtastlicht in Form eines einzigen Strahlenbündels erzeugt und anschließend auf die Probe gelenkt. Durch die Abtasteinheit, z.B. in Form von Kippspiegeln mit zwei zueinander senkrecht stehenden Kipp- bzw. Drehachsen im optischen Weg des Lichtstrahlenbündels, kann das Strahlenbündel über die Probe gerastert werden. Das Abtastlicht regt auf der Oberfläche oder in der Probe die Erzeugung von Sekundärlicht an, z.B. in der Form von Fluoreszenzlicht. Dieses Sekundärlicht wird über eine Abbildungsoptik gesammelt und auf einer Nachweiseinheit detektiert. Da die Abtasteinheit in Abhängigkeit von der Stellung der Kippspiegel zueinander und relativ zur Probe auf genau definierbare Weise jeweils einen bestimmten Fleck auf der Probe bestrahlt, kann mittels der Nachweiseinheit, die die Intensität des Sekundärlichts erfaßt, eine ortsabhängige Aussage über die entsprechende Eigenschaft der Probe getroffen werden.

Da die Ortsauflösung bereits durch die Abtasteinheit erhalten wird, ist nach dem Stand der Technik die Detektorvorrichtung ein einfacher, nicht ortsauflösender Punktdetektor, der lediglich das Vorhandensein oder die Abwesenheit einer Sekundärtichtemission unabhängig von deren Erzeugungsstelle auf der Probe detektiert. Nach der Bestrahlung einer bestimmten Abtaststelle auf der Probe muß dabei jedoch bis zur Bestrahlung einer nächsten Abtaststelle auf der Probe solange gewartet werden, bis das durch das Sekundärlicht in dem Fotodetektor erzeugte elektrische Signal erkannt und ausgelesen wurde und der Fotodetektor für die nächste Messung neu initialisiert wurde. Sogar bei Verwendung einer schnellen Ausleseelektronik stellt diese Wartezeit eine unerwünschte Verzögerung bei einer Fluoreszenzuntersuchung einer größeren abzutastenden Probe dar.

Die Abtastzeit für die Vermessung der gesamten Probe hängt von verschiedenen weiteren Parametern ab, wie der Größe des Bildfelds auf der Probe, des Abtastinkrements, der Fleckgröße des Abtaststrahls auf der Probe, der Integrationszeit der Nachweiseinheit, der Abtastgeschwindigkeit bzw. der Spiegelgeschwindigkeit der Abtasteinheit und dem gewünschten Signal-zu-Rausch-Verhältnis. Bei Proben mit Abmessungen im Zentimeterbereich und hoher Ortsauflösung mit einem auf wenige Mikrometer fokussierten Abtaststrahlenbündel ergeben sich bei herkömmlichen Abtastvorrichtungen Abtastzeiten im Minuten- bis Stundenbereich. Derart lange Abtastzeiten stellen jedoch ein großes Problem bei Betrieb solcher Abtastvorrichtungen dar.

US 4,806,004 betrifft ein Verfahren und eine Vorrichtung zur Verbesserung des Kontrasts und der Auflösung einer bestimmten Antwort eines Objekts auf Beleuchtung, wobei ein zweidimensionales Array von Lichtpunkten in einer Ebene des Array beweglich gemacht wird und das Objekt abgetastet wird, indem das zweidimensionale Array von Lichtpunkten seitlich über das Objekt bewegt wird.

US 5,554,318 beschreibt, wie die Fluoreszenz einer Detektorverbindung mit einer schwarzweiß Videokamera aufgenommen wird. Dabei wird die Probe mit dem fokussierten Strahl eines Halbleiterdiodenlasers abgetastet.

US 5,150,249 beschreibt einen zweidimensionalen Scanner, der erste und zweite drehbare Spiegel verwendet und die Position eines Zielpunktes zu kontrollieren, den ein Lichtpunkt in einer Zielebene einnehmen soll.

Die Aufgabe der vorliegenden Erfindung ist, eine verbesserte Lichtabtastvorrichtung zur Abtastung einer Probe und zum Nachweis von durch das Abtastlicht angeregter Sekundärstrahlung zu schaffen, mit der eine schnellere und effizientere Abtastung einer großen Probe unter hoher Ortsauflösung erzielbar ist.

Erfindungsgemäß wird diese Aufgabe gelöst durch eine Lichtabtastvorrichtung der eingangs genannten Art, die sich durch die Merkmale nach Anspruch 1 auszeichnet.

Bevorzugte Ausführungsformen werden durch die abhängigen Ansprüche definiert.

Bei der erfindungsgemäßen Lösung wird mittels der Erfassungsoptik eine mit dem Abtastlicht abgetastete, von der Vergrößerung der Erfassungsoptik abhängige Teilfläche der Probe (bzw. die gesamte Probenfläche) auf die flächige, feldartig mit Detektorelementen versehene Detektorvorrichtung abgebildet. Aufgrund der Fähigkeit zur ortsaufgelösten Erfassung des Sekundärlichts ist eine eindeutige Abbildung und Zuordnung der jeweiligen Detektorelemente zu einem entsprechenden Gebiet auf der Probe, auf das das Abtastlicht fokussiert wird, gewährleistet. Daher ist es möglich, die auf die Detektorvorrichtung abgebildete Teilfläche der Probe ohne Wartezeiten zwischen den einzelnen Abrasterungspositionen abzutasten und die gesamte Detektorvorichtung mit allen Detektorelementen gemeinsam nach Beendigung des Abtastvorgangs auszulesen. Damit wird eine wesentlich schnellere Abtastung als bei Verwendung eines Punktdetektors erzielt. Ein weiterer Vorteil der erfindungsgemäßen Lösung besteht darin, daß die Genauigkeit der Ortsauflösung auf der Probe durch das Auflösungsvermögen des Detektors sichergestellt wird und nicht mehr von bei der Abtastung in den Kippspiegeln eventuell auftretenden Toleranzen beeinflußt wird. Aufgrund der sequentiellen Abtastung der Probe mit dem Anregungslicht, bei der jeweils nur eine Stelle der Probe mit der Größe des Abtaststrahls mit relativ intensiver Strahlung beleuchtet wird, wird ein wesentlich höheres lokales Fluoreszenzsignal erzielt als bei flächiger Probenausleuchtung. Daher führt die nach dem Stand der Technik nicht bekannte Schaffung einer doppelten Ortsauflösung sowohl durch die Abtasteinheit als auch durch die Detektorvorrichtung einerseits zu einer Erhöhung des Fluoreszenzsignals eines jeweiligen Abtastpunkts und andererseits dennoch zu einer drastischen Verringerung der für eine großflächige Probe erforderlichen Abtastzeit.

Ein weiterer Vorteil der erfindungsgemäßen Vorrichtung besteht darin, daß Abbildungsfehler der Erfassungsoptik beispielsweise mit Hilfe eines einmaligen Testverfahrens, z.B. mit Hilfe eines Testgitters, wie eines Ronchi-Gitters, ermittelt und nachfolgend zur Bildkorrektur verwendet werden können. Dadurch ist es möglich, einfache Objektive, die in vergleichsweise geringem Maß korrigiert und folglich billiger sind, für die Erfassungsoptik zu verwenden.

Erfindungsgemäß ist die Erfassungsoptik eine Variooptik mit variabler Vergrößerung, wobei ein variables Probengebiet auf die konstante Detektorfläche abgebildet wird. Damit ist es möglich, auf relativ einfache Weise das Auflösungsvermögen unter entsprechender Veränderung des Abtastgebiets einzustellen. Bei einem verkleinernden Abbildungsmaßstab kann eine Übersicht über eine größere Fläche gewonnen werden, ohne daß eine entsprechende Änderung der durch die Abtasteinheit durchgeführten Abtastung erforderlich ist. Andererseits können bei vergrößerter Abbildung Details auf der Probenfläche sichtbar gemacht werden, wiederum ohne Veränderung der durch die Abtasteinheit erzeugten Abtastbedingungen.

Es ist insbesondere vorteilhaft, eine Probenhalterung vorzusehen, die wenigstens in einer Richtung bezüglich einer optischen Achse des Abtastlichts verschiebbar ist. Bei Detailuntersuchungen der Probe können damit unterschiedliche Probengebiete in die Gegenstandsebene der Erfassungsoptik bewegt werden.

In einer weiteren vorteilhaften Weiterbildung der Erfindung umfaßt die Erfassungsoptik ein erstes Objektiv und ein zweites Objektiv, die zueinander im Abstand stehen. Zwischen den beabstandeten beiden Objektiven können weitere optische Elemente zur Bearbeitung bzw. Beeinflussung des Sekundärlichts vorgesehen sein. Vorteilhafterweise wird zwischen den Objektiven ein Kantenfilter zur Unterdrückung des Anregungslichts vorgesehen. Dabei ist es insbesondere vorteilhaft, daß das erste Objektiv, mit dem das von der Probe emittierte Sekundärlicht und auch in der Probe getreutes Anregungslicht erfaßt wird, auf der Bildseite Tetezentrizität aufweist, d.h. daß die Austrittspupille im Unendlichen liegt Die gesamte Gegenstandsfläche wird nach unendlich abgebildet. Aufgrund der Telezentizität des bildseitigen Strahlenbündels treffen alle Lichtstrahlen auf den zwischen den beiden Objektiven angeordneten Kantenfilter unter konstantem Einfallswinkel auf, so daß die für Interferenzfilter notwendige senkrechte Inzidenz gewährleistet ist.

Gemäß einer weiteren vorteilhaften Ausführungsform ist eine Fokussierungsoptik zur Fokussierung des Anregungslichts auf die Probe vorgesehen. Dadurch kann die Spotintensität des Anregungslichts weiter erhöht werden, wodurch die Auflösung und Intensität des Sekundärlichts gesteigert wird. Vorteilhafterweise handelt es sich bei der Fokussierungsoptik um ein F/θ-Objektiv, bei dem eine Abbildung des Abtasistrahlenbündels gemäß der sogenannten F/θ-Bedingung y' = F·⊖ durchgeführt wird, wobei y' die Abbildungskoordinate, F die Brennweite und θ der Winkel ist. den das Abtaststrahlenbündel mit der optischen Achse einschließt. Dadurch wird eine Proportionalität zwischen dem Abtastwinkel und der Bildhöhe y und zugleich eine Proportionalität zwischen der Winkelgeschwindigkeit des Ablenksystems und der Abtastgeschwindigkeit einer Probenebene sichergestellt Bei konstanter Winkelgeschwindigkeit der Abtastspiegel wird somit aufgrund der Linearität zwischen der Abtastgeschwindigkeit auf der Probe und der Winkelgeschwindigkeit eine konstante Anregungsinstensität auf der Probe unabhängig von der Abtastposition geschaffen.

Gemäß einer weiteren vorteilhaften Weiterbildung umfaßt die Abtasteinheit zwei Kippspiegel, deren Drehachsen senkrecht zueinander stehen, um die Probe mit dem Anregungslicht abzutasten.

In einer weiteren vorteilhaften Weiterbildung der Erfindung ist eine Auslese- und Verarbeitungsschaltung vorgesehen zur Auslesung des Felds von Detektorelementen und zur Akkumulierung aufeinanderfolgender Ausgabewerte einander entsprechender Detektorelemente für aufeinanderfolgende Auslesungen. Wenn die Probe mehrmals bzw. kontinuierlich mit dem Abtastlicht abgestastet wird, kann man bei Akkumulierung der Auslesewerte die Abtastung on line verfolgen, wodurch sich z.B. Veränderungen auf der Probe, z.B. aufgrund kinetischer Prozesse, beobachten lassen.

In einer weiteren vorteilhaften Ausführungsform ist eine Aufteitungsvorrichtung vorgesehen zur Aufteilung des Anregungslichts in eine Vielzahl von Abtaststrahlenbündeln zur simultanen Abtastung der Probe. Aufgrund der Verwendung des ortsauflösenden Detektors kann an der Probe an mehreren Stellen eine Sekundärlichtemission simultan angeregt werden, ohne daß die eindeutige Ortszuordnung des erzeugten Sekundärlichts verlorengeht. Dadurch ist eine weitere Erhöhung der Abtastgeschwindigkeit möglich.

Weitere vorteilhafte Ausführungsformen gehen aus den Unteransprüchen hervor.

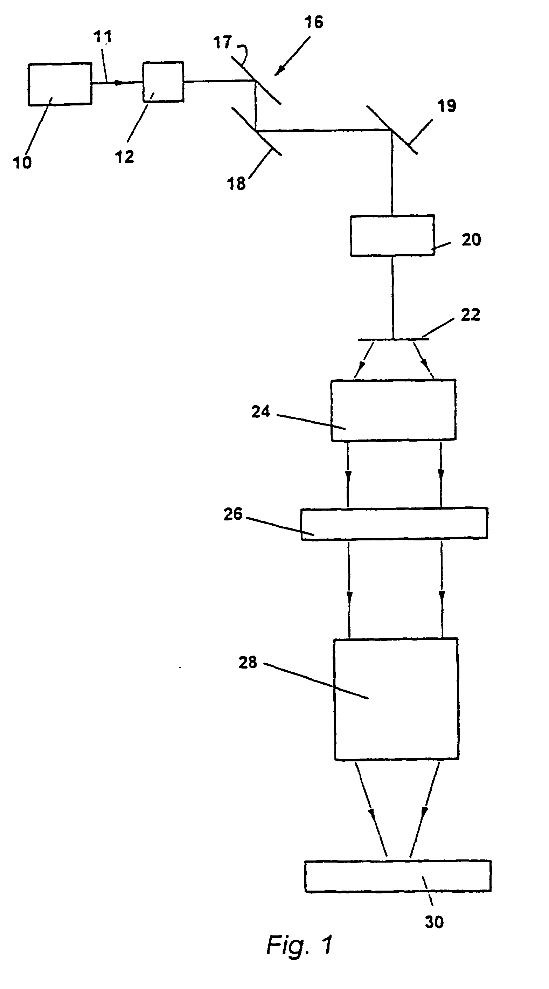

Nachfolgend wird die vorliegende Erfindung anhand eines vorteilhaften Ausführungsbeispiels in bezug auf die begleitende Zeichnung näher erläutert und beschrieben. In der Zeichnung zeigt
- Fig. 1: schematisch eine erfindungsgemäße Abtastvorrichtung.

In der in der Zeichnung dargestellen Ausführungsform ist eine Lichterzeugungsvorrichtung 10, z.B. ein Laser, vorgesehen, die Abtastlicht in einer bestimmten Wellenlänge in Form eines Strahlenbündels 11 emittiert. Zur Formung bzw. Veränderung des Strahlenbündels 11 ist eine Strahlformungsvorrichtung 12 vorgesehen, mit der das Strahlenbündel aufgeweitet und/oder räumlich gefiltert werden kann. Im weiteren Verlauf des Strahlengangs des Strahlenbündels 11 folgt eine Abtasteinheit 16, die zwei Kippspiegel 17 und 18 mit zueinander senkrecht stehenden Dreh- bzw. Kippachsen aufweist. An den Kippspiegeln 17 und 18 wird das Strahlenbündel reflektiert und zu einem weiteren Umlenkspiegel 19 geleitet. Dort wird das Abtastlicht zu einer Fokussierungsoptik 20 reflektiert und anschließend auf eine Probe 22 fokussiert.

Bei Anordnung der Lichtemissionsvorrichtung 10 derart, daß das Strahlenbündel 11 anfänglich parallel zur Einfallsrichtung des fokussierten Abtastlichts ist, könnte der Umlenkspiegel 19 entfallen.

Bei der in Fig. 1 gezeigten Anordnung wird das von der Probe 22 emittierte Sekundärlicht in dem von der Anregungsseite abgewandten Halbraum, d.h. in einem transluzenten Meßverfahren, detektiert. Dazu ist eine Erfassungsoptik mit einem ersten Objektiv 24 und einem zweiten Objektiv 28 vorgesehen, mit dem ein Gebiet auf der Probe 22 auf einen Detektor 30 abgebildet wird.

Bei dem Detektor 30 handelt es sich vorzugsweise um einen leistungsfähigen CCD-Detektor mit einer Vielzahl von sehr kleinen Detektorelementen mit Dimensionen im Mikrometerbereich, die unter fester Bestimmung ihrer Ortskoordinaten feldartig angeordnet sind.

Das erste Objektiv 24 der Erfassungsoptik ist vorzugsweise ein hoch geöffnetes Objektiv mit kurzer Schnittweite, das die Gegenstandsfläche auf der Probe nach unendlich abbildet. Das erste Objektiv weist Telezentrizität auf der Bildseite auf. Vorzugsweise besitzt das erste Objektiv eine hohe Abbildungsschärfe über dem gesamten Gegenstandsbildfeld, was durch geeignete Bildkorrekturmaßnahmen erzielbar ist.

In dem Zwischenraum zwischem dem ersten Objektiv 24 und dem zweiten Objektiv 28 ist vorzugsweise ein Kantenfilter 26 zur Unterdrückung von durch die Probe transmittiertem Anregungslicht, das eine gegenüber der Fluoreszenz unterschiedliche, nämlich kürzere Wellenlängen aufweist, angeordnet. Aufgrund der Telezentrizität des Strahlenbündels zwischen den beiden Objektiven 24 und 28 ist die Funktion des Kantenfilters 26 optimiert, da das Licht einen konstanten Einfallswinkel aufweist.

Mittels des zweiten Objektivs 28 wird aus dem vom ersten Objektiv 24 erzeugten telezentrischen Strahlenbündel ein Bild der Gegenstandsfläche an der Probe auf der Detektorvorrichtung 30 erzeugt. Vorteilhafterweise ist die Kombination aus dem ersten Objektiv 24 und dem zweiten Objektiv 28 so ausgelegt, daß der interessierende Probenbereich die vorgegebene Fläche der Detektorvorrichtung voll ausleuchtet. Dabei ist es insbesondere günstig, wenn das System einen variablen Abbildungsmaßstab aufweist, so daß der interessierende Probenbereich und damit die Vergrößerung auf der Probe verändert werden kann.

Das Fokussierungsobjektiv 20 zur Fokussierung des Abtastlichts auf die Probe ist vorteilhafterweise ein F/θ-Objektiv. das das Strahlenbündel unabhängig von der Ablage, d.h. dem Abstand von der optischen Achse, scharf auf Fleckgrößen im Mikrometerbereich auf die Probe 22 fokussiert. Bei dem F/θ-Objektiv wird eine Abbildung des Abtaststrahlenbündels gemäß der sogenannten F/θ-Bedingung y' = F·⊖ durchgeführt, wobei y' die Abbildungskoordinate, F die Brennweite und θ der Winkel ist, den das Abtaststrahlenbündel mit der optischen Achse einschließt Im Gegensatz zu herkömmlichen Objektiven, bei denen die sonst übliche Bedingung y' = |F·tan⊖ gilt, führt das F/θ-Objektiv zu einer tonnenförmigen Verzeichnung. Dadurch wird eine Proportionalität zwischen dem Abtastwinkel und der Bildhöhe y' und zugleich auch eine Proportionalität zwischen der Winkelgeschwindigkeit des Ablenksystems und der Abtastgeschwindigkeit der Probenebene sichergestellt. Bei konstanter Winkelgeschwindigkeit für die Ablenkung des Strahlenbündels wird somit aufgrund der Linearität zwischen der Abtastgeschwindigkeit auf der Probe und der Winkelgeschwindigkeit eine konstante Anregungsintensität auf der Probe unabhängig von der Abtastposition geschaffen.

Diese Anordnung der Fokussierungsoptik zwischen der Abtasteinheit 16 und der Probe 22 wird als "Pre-Objective-Scanning" bezeichnet. Dies wird häufiger angewandt als ein "Post-Objective-Scanning", bei dem die Fokussierungsoptik im optischen Weg vor der Ablenkeinheit 10 angeordnet ist, so daß das nach der Fokussierungsoptik konvergente Abtastlicht über die Abtastspiegel abgelenkt und auf die Probe 22 geleitet wird. Bei dieser Art der Anordung der Fokussierungsoptik vor der Abtasteinheit 16 werden an das Objektiv nur minimale Forderungen gestellt. Es kann einen kleinen Durchmesser haben und braucht nur im paraxialen Gebiet scharf abzubilden. Die hinter dem Objektiv angeordnete Ablenkeinheit führt jedoch zu einer gekrümmten Abtastlinie, die auf einem Kreisbogen um die Drehachse des Kippspiegels liegt. Zum Abtasten ebener Oberflächen ist daher die Anordnung des "Post-Objective-Scanning" nicht bevorzugt.

Daher ist die "Pre-Objective-Scanning"-Anordnung mit einem F/θ-Objektiv. mit dem eine Abbildung in eine Ebene mit einer zum Ablenkwinkel proportionalen Bildkoordinate möglich ist, vorteilhaft. Das F/θ-Objektiv in der "Pre-Objective-Scanning"-Anordnung muß jedoch einen relativ großen Durchmesser aufweisen, um auch Abtaststrahlenbündel mit großem Abtastwinkel noch aufznehmen. Es muß auch über einen relativ großen Bitdwinkel entsprechend der Verkippung des Lichtstrahlenbündels gegenüber der Achse korrigiert sein und es muß femer eine gute Bildfeldebnung aufweisen.

Die Probe ist vorzugsweise auf einem Schlitten angeordnet, der in wenigstens einer Richtung senkrecht zur optischen Achse des Anregungslichts verfahrbar ist. Damit wird einerseits ermöglicht, die Probe auf den Schlitten ein- bzw. auszuladen und außerdem kann bei hoher Vergrößerung der Erfassungsoptik, mit der nicht mehr die gesamte Fläche der Probe auf der Detektorvorrichtung abbildbar ist, das jeweils interessierende Gebiet der Probe im Gegenstandsfeld der Erfassungsoptik positioniert werden.

Während die in Fig. 1 gezeigte Anordnung das transluzente Meßverfahren verwendet, wäre es auch möglich, das Sekundärlicht in reaktiver Anordnung zu erfassen und zu detektieren. Dazu müßte ein Strahlteiler, vorteilhafterweise ein dichroitischer Strahlteiler, im optischen Weg des Anregungslichts vorgesehen werden. Der dichroitische Strahlteiler ist entweder für das Laserlicht oder das Sekundärlicht, die vorbestimmte unterschiedliche Wellenlängen aufweisen, im wesentlichen transparent, wogegen das jeweils andere Licht reflektiert wird. Beispielsweise könnte in dieser Ausführungsform der Umlenkspiegel 19 ein dichroitischer Spiegel sein.

Bei Betrieb der erfindungsgemäßen Abtastvorrichtung wird die gesamte Probenfläche abgerastert, wobei durch die 1:1 Zuordnung zwischen Proben- und Bildfläche auf der Detektorvorrichtung ein Fluoreszenzsignal nur an einer Position erzeugt wird, die einem Sekundärlicht emittierenden Probenort entspricht. Nach Beendigung der Abtastung liegt im Detektor eine ortsverteilte Erfassung von Sekundärlicht von der Probe vor, die ausgelesen und weiterverarbeitet werden kann.

Eventuelle Abbildungsfehler der Erfassungsoptik können mit Hilfe eines Testverfahrens, z.B. unter Verwendung eines Testgitters wie eines Ronchi-Gitters, ermittelt, gespeichert und nachfolgend bei der Weiterverarbeitung zur Bildkorrektur verwendet werden. Eine möglicherweise vorhandene unterschiedliche Empfindlichkeit der einzelnen Detektorelemente sowohl in spektraler Hinsicht wie auch in bezug auf die Intensität kann ebenfalls ohne Probe mit Konstantlichtbeleuchtung einmalig gemessen werden und in einer Korrekturtabelle gespeichert und für die Weiterverarbeitung der ausgelesenen Meßergebnisse benutzt werden.

Die Auslesung der Detektorvorrichtung kann asynchron zur Abtastung erfolgen, wobei für nacheinander folgende Abtastungen die Signale gleicher Detektorelemente akkumuliert werden. Bei Auslesung mehrerer oder aller Detektorelemente (frame) kann durch die akkumulierende Darstellung die Abtastung (bzw. wiederholte Abtastung) on line verfolgt werden, wodurch u.U. auftretende kinetische Prozesse beobachtbar sind. Nach der Auslesung werden die Detektorelemente neu initialisiert (reset), so daß nicht beleuchtete Detektorelemente kein Dunkelsignal aufintegrieren können. Die Unterdrückung des Dunkelwerts ist unabhängig von der Integrationszeit, d.h. der Zeit zwischen zwei aufeinanderfolgenden Auslesungen. Zur Kombination der akkumulierenden Darstellung mit der neuen Initialisierung nach jeder Auslesung wird vorteilhafterweise für jedes Pixel eine Verknüpfung nach Art einer logischen ODER-Funktion zwischen aufeinanderfolgenden Auslesungen vorgesehen.

Da es eine eindeutige Zuordnung Probenposition - Detektorort gibt und die Laserposition auch zu jedem Zeitpunkt gekannt ist, könnte folgendermaßen ausgelesen werden: nach jeder gerasterten Zeile schickt der Scanner einen Triggerpuls an die Ausleseelektronik des CCDs, um nur die aktuelle, beleuchtete Zeile auszulesen und danach den Chip zu resetten. Das hat den Vorteil, daß die Dunkelstromintegration nur für die Dauer einer Zeile währt, nicht aber für die gesamte Probenabtastung. Jeder Triggerimpuls inkrementiert die Elektronik, so daß die nächste Zeile ausgelesen werden kann. Wird die n-te Zeile beaufschlagt, so müssen n Zeilen zum nächstmöglichen Rand des Chips geschoben werden (zum Ausleseregister). Dabei ist vorgesehen, daß jeder Seite des in zwei Hälften unterteilten Chips ein Ausleseregister zugeordnet ist Beim Auslesen einer Zeile z.B. oberhalb der Mitte werden die Ladungen in das Ausleseregister der oberen Hälfte und bei Auslesen einer Zeile unterhalb der Mitte werden die Ladungen in das Austeseregister der unteren Hälfte geschoben.

Zur Erzielung der besten Fokussierung des Abtastlichts auf der Probe bzw. zur Fokussierung auf unterschiedlich dicke Proben, kann eine Nachregelung der Fokussierung durch Einstellung der Strahlaufweitung in der Aufweitungsvorrichtung 12 unter Überwachung des auf der Detektorvorrichtung erhaltenen Bildflecks erfolgen. Die optimale Fokussierung liegt dann vor, wenn auf der Detektorvorrichtung ein minimaler Bildfleck entsteht.

Durch die erfindungsgemäße Vorrichtung wird gegenüber dem Stand der Technik der Vorteil erzielt, daß eine schnellere Abtastung einer Probe möglich ist, da das bei bisher üblichen Punktdetektoren notwendige Auslesen des Detektors für jeden Abtastpunkt auf der Probe und eine damit zusammenhängende Wartezeit zwischen der Weiterführung des Strahls zu einem nächsten Abtastpunkt entfällt Die räumliche Auflösung ist in der erfindungsgemäßen Vorrichtung nur limitiert durch die Dichte bzw. Größe der Detektorelemente, die Güte der Objektive und den Abbitdungsmaßstab, nicht jedoch von den Abtastintervallen und der Abtastgeschwindigkeit.

## Patentansprüche

1. Lichtabtastvorrichtung zur Anregung und Detektion von Sekundärlicht, insbesondere von Fluoreszenzlicht, an einer Probe (22) mit
einer Lichtemissionsvorrichtung (10) zur Aussendung von Anregungslicht mit einer für eine Sekundärlichtanregung auf oder in der Probe geeigneten Wellenlänge,
einer Abtasteinheit (10) zur Abtastung wenigstens einer Teilfläche der Probe mit dem Anregungslicht, und
einer Nachweiseinheit für das bei Anregung der Probe emittierte Sekundärlicht mit einer Erfassungsoptik (24, 28) und mit einer Detektorvorrichtung (30),
wobei die Detektorvorrichtung (30) eine Vielzahl von unter vorgegebenen Ortskoordinaten in einem Feld angeordneten Detektorelementen umfaßt, die in einer Abbildungsebene der Erfassungsoptik angeordnet sind und ortsaufgelöst detektiertes Licht in elektrische Signale umwandeln, **dadurch gekennzeichnet, daß** die Erfassungsoptik (24, 28) eine Variooptik mit variabler Vergrößerung ist, wobei die Bildfeldgröße auf dem Detektor konstant haltbar ist und die Gegenstandsfeldgröße auf der Probe variierbar ist und die Lichtabtastvorrichtung weiterhin ein Mittel zur Anpassung der Empfindlichkeiten von einzelnen Detektorelementen aufweist.

2. Lichtabtastvorrichtung gemäß Anspruch 1, **dadurch gekennzeichnet, daß** die Detektorvorrichtung (30) ein CCD-Chip ist.

3. Lichtabtastvorrichtung gemäß einem der Ansprüche 1-2, **dadurch gekennzeichnet, daß** eine Probenhalterung vorgesehen ist, die in wenigstens einer Richtung bezüglich der optischen Achse des Abtastlichts verschiebbar ist.

4. Lichtabtastvorrichtung gemäß einem der vorhergehenden Ansprüche, **dadurch gekennzeichnet, daß** die Erfassungsoptik ein erstes Objektiv (24) und ein zweites Objektiv (28) umfaßt, die im Abstand zueinander angeordnet sind.

5. Lichtabtastvorrichtung gemäß Anspruch 4, **dadurch gekennzeichnet, daß** das erste Objektiv (24), mit dem das von der Probe emittierte Sekundärlicht erfaßt wird, auf der Bildseite Telezentrizität aufweist.

6. Lichtabtastvorrichtung gemäß Anspruch 5, **dadurch gekennzeichnet, daß** zwischen dem ersten und zweiten Objektiv ein Abschneidefilter (26) zur Unterdrückung des Anregungslichts vorgesehen ist.

7. Lichtabtastvorrichtung gemäß einem der vorhergehenden Ansprüche, **dadurch gekennzeichnet, daß** die Lichtemissionsvorrichtung (10) ein Laser ist.

8. Lichtabtastvorrichtung gemäß einem der vorhergehenden Ansprüche, **dadurch gekennzeichnet, daß** das Anregungslicht in Form eines Lichtstrahls (11) erzeugt wird, und daß eine Strahlaufweitungseinheit (12) zur Aufweitung des Strahlquerschnitts vorgesehen ist.

9. Lichtabtastvorrichtung gemäß einem der vorhergehenden Ansprüche, **dadurch gekennzeichnet, daß** die Abtasteinheit (16) zwei Kippspiegel (17, 18) umfaßt, deren Drehachsen zueinander senkrecht stehen, zur Abtastung der Probe mit dem Anregungslicht.

10. Lichtabtastvorrichtung gemäß einem der vorhergehenden Ansprüche, **dadurch gekennzeichnet, daß** eine Fokussierungsoptik (20) zur Fokussierung des Anregungslichts auf die Probe vorgesehen ist.

11. Lichtabtastvorrichtung gemäß Anspruch 10, **dadurch gekennzeichnet, daß** die Fokussierungsoptik ein F/θ-Objektiv umfaßt.

12. Lichtabtastvorrichtung gemäß einem der vorhergehenden Ansprüche, **dadurch gekennzeichnet, daß** eine Auslese- und Verarbeitungsschaltung vorgesehen ist, zur Auslesung des Felds von Detektorelementen und zur Akkumulierung aufeinanderfolgender Ausgabewerte einander entsprechender Detektorelemente für aufeinanderfolgende Auslesungen.

13. Lichtabtastvorrichtung gemäß Anspruch 12, **dadurch gekennzeichnet, daß** die Auslese- und Verarbeitungsschaltung weiter für jedes Detektorelement zur Unterdrückung aufeinanderfolgender Dunkelwerte eine Schaltung nach Art einer logischen Oder-Schaltung umfaßt.

14. Lichtabtastvorrichtung gemäß einem der vorhergehenden Ansprüche, **dadurch gekennzeichnet, daß** eine Aufteilungsvorrichtung vorgesehen ist zur Aufteilung des Anregungslichts in eine Vielzahl von Abtaststrahtenbündeln zur simultanen Abtastung der Probe.

## Claims

1. A light scanning device for exciting and detecting secondary light, especially fluorescent light, on a sample (22), comprising
a light-emitting device (10) for emitting excitation light having a wavelength which is suitable for exciting secondar light on or in the sample,
a scanning unit (10) for scanning at least one subarea of the sample with said excitation light, and
a detection unit for the secondary light emitted in response to excitation of the sample, said detection unit comprising a detection optics (24, 28) and a detector device (30),
wherein the detector device (30) comprises a large number of detection elements arranged in an array with predetermined position coordinates, said detection elements being arranged in an imaging plane of the detection optics and converting light detected in a spatially resolved manner into electric signals, **characterized in that** the detection optics (24, 28) is a varifocal optics with variable magnification in the case of which the image field size on the detector can be kept constant and the object field size on the sample can be varied, and that the light scanning device additionally comprises means for adapting the sensitivities of individual detection elements.

2. A light scanning device according to claim 1, **characterized in that** the detector device (30) is a CCD chip.

3. A light scanning device according to one of the claims 1 to 2, **characterized in that** a sample holder is provided which is adapted to be displaced in at least one direction relative to the optical axis of the scanning light.

4. A light scanning device according to one of the preceding claims, **characterized in that** the detection optics comprises a first lens (24) and a second lens (28) which are arranged in spaced relationship with each other.

5. A light scanning device according to claim 4, **characterized in that** the first lens (24), by means of which the secondary light emitted by the sample is detected, shows telecentricity on the image side.

6. A light scanning device according to claim 5, **characterized in that** a cut-off filter (26) for suppressing the excitation light is provided between the first and the second lens.

7. A light scanning device according to one of the preceding claims, **characterized in that** the light-emitting device (10) is a laser.

8. A light scanning device according to one of the preceding claims, **characterized in that** the excitation light is produced in the form of a light beam (11) and that a beam expansion unit (12) is provided for expanding the beam cross-section.

9. A light scanning device according to one of the preceding claims, **characterized in that** the scanning unit (16) comprises two tilting mirrors (17, 18) whose axes of rotation extend perpendicular to one another, said tilting mirrors being used for scanning the sample with the excitation light.

10. A light scanning device according to one of the preceding claims, **characterized in that** a focussing optics (20) is provided for focussing the excitation light onto the sample.

11. A light scanning device according to claim 10, **characterized in that** the focussing optics comprises an F/θ lens.

12. A light scanning device according to one of the preceding claims, **characterized in that** a read-out and processing circuit is provided for reading the array of detection elements and for accumulating successive output values of corresponding detection elements for successive read-out operations.

13. A light scanning device according to claim 12, **characterized in that** the read-out and processing circuit additionally comprises for each detection element a circuit of the logic OR circuit type for suppressing successive dark values.

14. A light scanning device according to one of the preceding claims, **characterized in that** a division device is provided for dividing the excitation light into a plurality of scanning beams for simultaneously scanning the sample.

## Revendications

1. Dispositif de balayage lumineux en vue de l'excitation et de la détection de lumière secondaire, en particulier de lumière fluorescente sur un échantillon (22) à l'aide
d'un dispositif d'émission de lumière (10) en vue de l'émission de lumière d'excitation, ayant une longueur d'onde appropriée à une excitation de lumière secondaire sur ou dans un échantillon,
d'une unité de balayage (10) en vue du balayage d'au moins une surface partielle de l'échantillon à l'aide de la lumière d'excitation, et
d'une unité de détection de la lumière secondaire émise lors de l'excitation de l'échantillon à l'aide d'une optique de saisie (24, 28) et d'un dispositif à détecteurs (30),
le dispositif à détecteurs (30) comprenant une pluralité d'éléments détecteurs disposés dans un champ sous des coordonnées locales prédéterminées, qui sont disposés dans un plan image de l'optique de saisie et qui convertissent la lumière détectée en résolution locale en signaux électriques, **caractérisé en ce que** l'optique de saisie (24, 28) est une optique à focale variable à agrandissement variable, la grandeur du champ d'image sur le détecteur pouvant être maintenue constante et la grandeur du champ de l'objet sur l'échantillon étant variable et le dispositif de balayage lumineux présentant en outre un moyen en vue de l'adaptation des sensibilités des éléments détecteurs individuels.

2. Dispositif de balayage lumineux selon la revendication 1, **caractérisé en ce que** le dispositif de détecteurs (30) est une puce CCD.

3. Dispositif de balayage lumineux selon l'une quelconque des revendications 1 à 2, **caractérisé en ce que** l'on prévoit un support d'échantillon, qui peut être décalé dans au moins une direction par rapport à l'axe optique de la lumière de balayage.

4. Dispositif de balayage lumineux selon l'une quelconque des revendications précédentes, **caractérisé en ce que** l'optique de saisie comprend une premier objectif (24) et un deuxième objectif (28), qui sont disposés à une certaine distance l'un de l'autre.

5. Dispositif de balayage selon la revendication 4, **caractérisé en ce que** le premier objectif (24), grâce auquel la lumière secondaire émise à partir de l'échantillon est saisie, présente sur la face image une télécentricité.

6. Dispositif de balayage lumineux selon la revendication 5, **caractérisé en ce que** l'on prévoit, entre le premier et le deuxième objectif, un filtre de blocage (26) en vue de la suppression de la lumière d'excitation.

7. Dispositif de balayage lumineux selon l'une quelconque des revendications précédentes, **caractérisé en ce que** le dispositif d'émission de lumière (10) est un laser.

8. Dispositif de balayage lumineux selon l'une quelconque des revendications précédentes, **caractérisé en ce que** la lumière d'excitation est produite sous la forme d'un rayon lumineux (11) et **en ce qu'**une unité d'élargissement du rayon (12) est prévue en vue de l'élargissement de la section transversale du rayon.

9. Dispositif de balayage lumineux selon l'une quelconque des revendications précédentes, **caractérisé en ce que** l'unité de balayage (16) comprend deux miroirs basculants (17, 18), dont les axes de rotation sont perpendiculaires l'un par rapport à l'autre, en vue du balayage de l'échantillon à l'aide de la lumière d'excitation.

10. Dispositif de balayage lumineux selon l'une quelconque des revendications précédentes, **caractérisé en ce que** l'on prévoit une optique de focalisation (20) en vue de la focalisation de la lumière d'excitation sur l'échantillon.

11. Dispositif de balayage lumineux selon la revendication 10, **caractérisé en ce que** l'optique de focalisation comprend un objectif F/θ.

12. Dispositif de balayage lumineux selon l'une quelconque des revendications précédentes, **caractérisé en ce que** l'on prévoit un circuit de lecture et de traitement, en vue de la lecture du champ des éléments détecteurs et en vue de l'accumulation des valeurs de sortie successives des éléments détecteurs correspondants en rapport un à un pour des lectures successives.

13. Dispositif de balayage lumineux selon la revendication 12, **caractérisé en ce que** le circuit de lecture et de traitement comprend, en outre, pour chaque élément détecteur, en vue de la suppression des valeurs d'obscurité successives, un circuit du genre d'un circuit logique à fonction ou.

14. Dispositif de balayage lumineux selon l'une quelconque des revendications précédentes, **caractérisé en ce que** l'on prévoit un dispositif de subdivision en vue de la subdivision de la lumière d'excitation en une pluralité de faisceaux de rayons de balayage en vue du balayage simultané de l'échantillon.
